(19) Europäisches Patentamt
European Patent Office
Office européen des brevets

(11) **EP 1 845 408 B1**

(12) # EUROPEAN PATENT SPECIFICATION

(45) Date of publication and mention
of the grant of the patent:
**02.09.2009 Bulletin 2009/36**

(51) Int Cl.:
**G02F 1/1337** (2006.01)

(21) Application number: **07006658.4**

(22) Date of filing: **30.03.2007**

(54) **Alignment layer for liquid crystal display**

Ausrichtungsschicht für Flüssigkristallanzeigen

Couche d'alignement pour écran à cristaux liquides

(84) Designated Contracting States:
**DE FR GB**

(30) Priority: **13.04.2006 KR 20060033677**
**18.12.2006 KR 20060129412**

(43) Date of publication of application:
**17.10.2007 Bulletin 2007/42**

(73) Proprietors:
• **Samsung Electronics Co., Ltd.**
**Yeongtong-gu**
**Suwon-city, Gyeonggi-do 442-742 (KR)**
• **Industry-Academic Cooperation Foundation**
**Seodaemun-gu**
**Seoul (KR)**

(72) Inventors:
• **Rho, Soon-Joon**
**Gyeonggi-do (KR)**
• **Jeon, Baek-Kyun**
**Gyeonggi-do (KR)**
• **Park, Kyong-Ok**
**Gyeonggi-do (KR)**
• **Lee, Hee-Keun**
**Gyeonggi-do (KR)**
• **Baik, Hong-Koo**
**Seoul (KR)**
• **Kim, Kyung**
**Seoul (KR)**

• **Kim, Jong-Bok**
**Seoul (KR)**
• **Hwang, Byoung-Har**
**Gyeonggi-do (KR)**
• **Hyun, Dong-Choon**
**Seoul (KR)**
• **Ahn, Han-Jin**
**Seoul (KR)**

(74) Representative: **Dr. Weitzel & Partner**
**Friedenstraße 10**
**89522 Heidenheim (DE)**

(56) References cited:
**EP-A1- 0 301 660       US-A- 4 201 453**

• **MINHUA LU: "Liquid crystal orientation induced by Van der Waals interaction" JAPANESE JOURNAL OF APPLIED PHYSICS, PART 1 (REGULAR PAPERS, SHORT NOTES & REVIEW PAPERS) JAPAN SOC. APPL. PHYS JAPAN, vol. 43, no. 12, December 2004 (2004-12), pages 8156-8160, XP002441673 ISSN: 0021-4922**
• **SON ET AL: "Control of liquid crystal alignment by deposition of silicon oxide thin film" THIN SOLID FILMS, ELSEVIER-SEQUOIA S.A. LAUSANNE, CH, vol. 515, no. 5, 18 January 2007 (2007-01-18), pages 3102-3106, XP005823922 ISSN: 0040-6090**

**Description**

<u>Field of the Invention</u>

The present invention relates to an alignment layer, a method of forming the alignment layer, and a liquid crystal display (LCD) having the alignment layer.

<u>Description of the Related Art</u>

A liquid crystal display (LCD) displays an image using liquid crystals which transmit or block light according to their alignment direction. The alignment direction of the liquid crystals depends on alignment layers, which are formed on the two substrates adjacent to the liquid crystals in the LCD. The alignment layers allow the liquid crystals to be aligned with a specific orientation, for example, perpendicular to or parallel to the alignment layers.

The alignment layers are formed as organic layers by applying thin layers of a polyimide based material to two substrates using printing, and then heat-treating the thin layers. However, organic alignment layers have inferior thermal and chemical stabilities.

SUMMARY OF THE INVENTION

The present invention provides an alignment layer as defined in independent claims 1 and 5, a method of forming an alignment layer as defined in independent claims 8 and 9, and a liquid crystal display as defined in claim 13. Advantageous developments of the invention are defined in the respective dependent claims.

BRIEF DESCRIPTION OF THE DRAWING

The foregoing and other objects, features and advantages of the present invention will become readily apparent by a reading of the ensuing description together with the drawing, in which;

FIGS. 1A and 1B are cross-sectional views illustrating an alignment layer according to examples similar to the present invention, respectively;

FIG. 2 is a graph illustrating analysis results of components of thin layers for three samples;

FIGS. 3A, 3B and 3C are microscopic analysis photographs of thin layers for three samples;

FIG. 4 is a view for explaining an alignment principle of an ordinary inorganic alignment layer;

FIG. 5 is a graph illustrating measurement results of a refractive index with respect to thin layers for three samples;

FIG. 6 is a photograph showing light transmittance in a liquid crystal display (LCD) according to dielectric anisotropy of liquid crystals on the same alignment layer;

FIG. 7 is a graph illustrating an alignment characteristic according to the present invention, which is varied depending on a reflective index of an alignment layer;

FIGS. 8A and 8B are views for explaining a method of forming an alignment layer in accordance with embodiments of the present invention, respectively; and

FIG. 9 is a cross-sectional view of an LCD according to an embodiment of the present invention.

FIG. 10 is a graph illustrating a light reflectance as a function of a wavelength in the LCD of FIG. 9.

FIG. 11 is a graph illustrating a light transmittance as a function of a wavelength when alignment layers in the LCD of FIG. 9 have different composition ratios.

FIG. 12A is a graph illustrating a light transmittance as a function of a wavelength when alignment layers in the LCD of FIG. 9 have different thickness.

FIG. 12B is a graph illustrating a cumulative light transmittance within a wavelength range corresponding to a visible light when alignment layers in the LCD of FIG. 9 have different thickness.

FIG. 13 is a graph illustrating a mutual relation between thicknesses of a transparent electrode and an alignment layer in order to allow the LCD of FIG. 9 to have a high light transmittance.

DESCRIPTION OF THE EMBODIMENTS

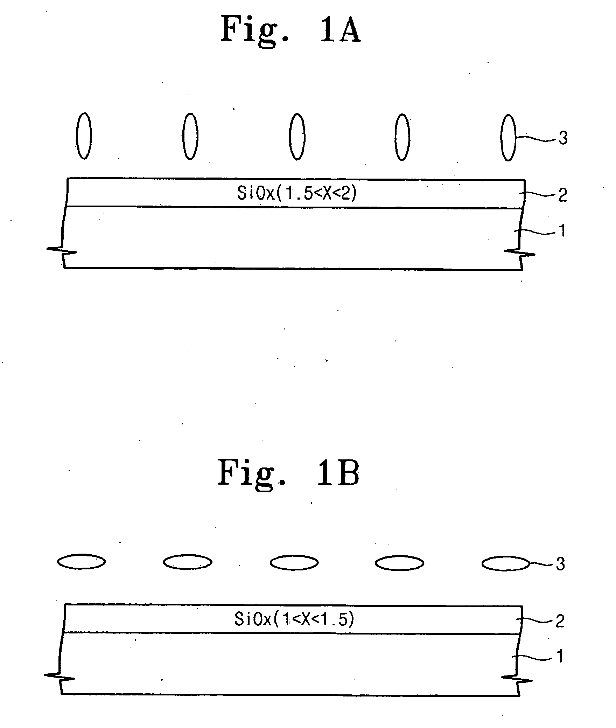

Referring to FIGS. 1A and 1B, the alignment layer 2 including a silicon oxide (SiOx) layer is formed on a transparent insulating substrate 1. Liquid crystals 3 are aligned on the alignment layer 2. The liquid crystals 3 have an oval cross section in which the length of the long axis is different from that of the short axis.

Hereinafter, an alignment direction of the liquid crystals 3 will be described on the basis of a lengthwise direction of the long axis. The alignment direction of the liquid crystals 3 depends on the ratio of silicon to oxygen constituting the silicon oxide. When the silicon oxide is expressed by a formula SiOx, the ratio refers to a value represented by "1:x" (hereinafter, both "ratio" and "x" are used in the same meaning).

As illustrated in FIG. 1A, when x has a value from 1.5 to 2.0, the liquid crystals 3 are aligned in a vertical direction. As illustrated in FIG. 1B, when x has a value from 1.0 to 1.5, the liquid crystals 3 are aligned in a horizontal direction. In this manner, the alignment direction of the liquid crystals 3 can be changed according to the value of x, which is proven from the following tests and their analysis results.

The Table below represents formation conditions of thin layers for three samples formed under different conditions.

Table

| Sample | Initial Pressure (Torr) | Working Pressure (Torr) | Oxygen Flow Rate (SCCM) |
|--------|-------------------------|-------------------------|-------------------------|
| S1 | $1.0 \times 10^{-6}$ | $7.8 \times 10^{-7}$ | - |
| S2 | $5.2 \times 10^{-6}$ | $2.3 \times 10^{-5}$ | - |
| S3 | $5.2 \times 10^{-6}$ | $1.0 \times 10^{-4}$ | 2 |

Referring to the Table above, the thin layers for three samples are silicon oxide layers formed by thermal evaporation deposition, wherein each sample has different initial pressure, working pressure, and oxygen flow rate in a processing chamber.

The first sample S1 is formed under the conditions that the initial and working pressures are lower than those of the second and third samples S2 and S3. If the initial and working pressures in the processing chamber are low, oxygen in the processing chamber is insufficient, so that the value of x of silicon oxide is reduced in the first sample S1. The third sample S3 is formed under the conditions that the initial pressure is identical to the second sample S2, and a predetermined amount of oxygen has been fed into the processing chamber. Thus, the value of x in the third sample S3 will be great as compared with that in the second sample S2.

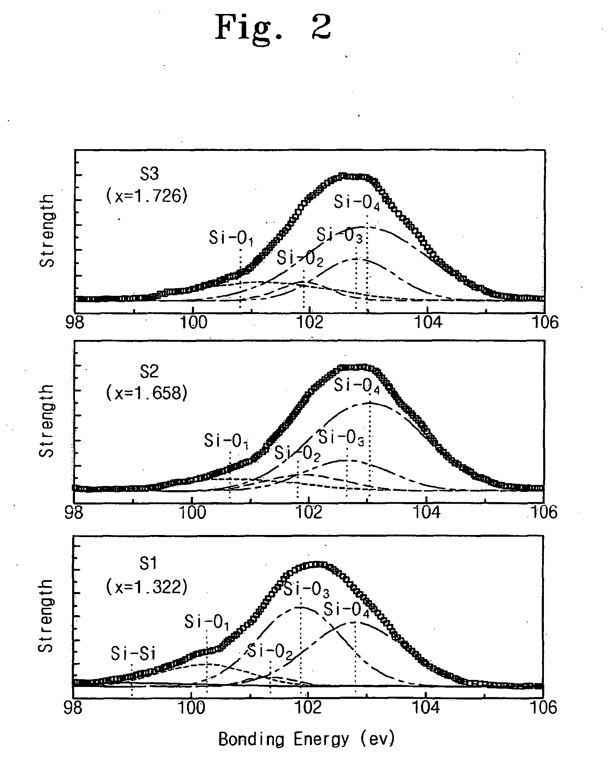

FIG. 2 is a graph illustrating analysis results of components of thin layers for three samples. The types of bonds (Si-Si, Si-O, Si-O$_2$, Si-O$_3$, Si-O$_4$) existing in each sample and their percentages are analyzed by measuring the bonding energy. From this analysis, the ratio of silicon oxide in the first, second and third samples S1 S2 and S3 can be obtained That is the value of x of silicon oxide (SiOx) is 1.322 for the first sample S1 , 1.658 for the second sample S2, and 1.726 for the third sample S3. These analysis results match with the prediction according to the process conditions of the first, second and third samples S1, S2 and S3.

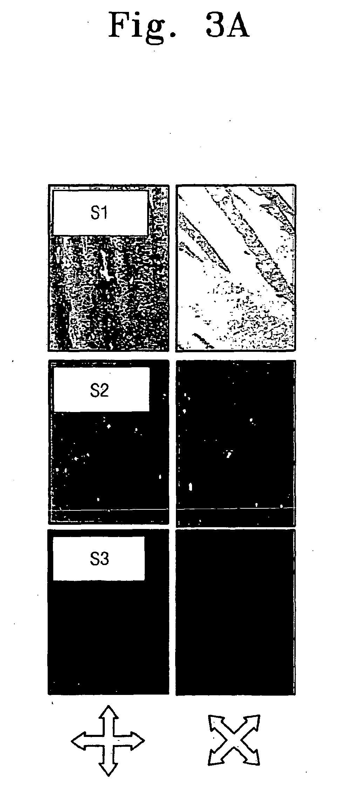

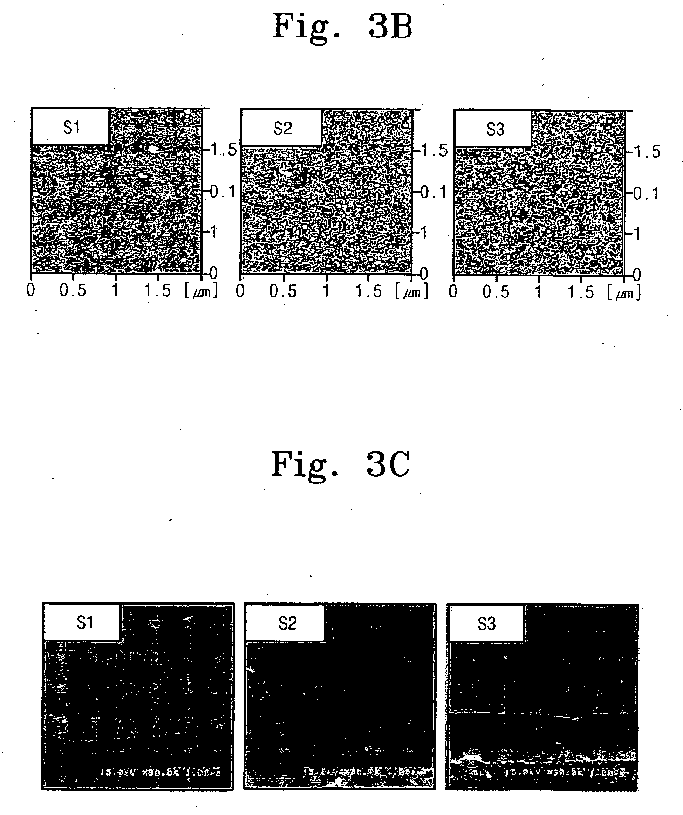

FIGS. 3A, 3B and 3C are microscopic analysis photographs of thin layers for three samples. FIG. 3A is a photograph showing liquid crystal structures of thin layers for three samples. Two polarizing sheets are disposed in such a manner that absorption axes thereof (indicated by arrows in FIG. 3A) are perpendicular to each other while interposing the liquid crystals and the thin layers therebetween. In FIG. 3A, left-side photographs are obtained under the condition that the absorption axes of the two polarizing sheets are disposed at angles of 0 degree and 90 degrees, respectively, and right-side photographs are obtained under the condition that the absorption axes of the two polarizing sheets are disposed at angles of 45 degrees and 135 degrees, respectively.

Referring to FIG. 3A, in the case of the first sample S1 , light is transmitted between the two polarizing sheets, and thus the liquid crystal structure is observed. In the cases of the second and third samples S2 and S3, light is not transmitted between the two polarizing sheets, and thus the liquid crystal structure is not observed. It can be understood from these results that the liquid crystals cause the light to be changed in phase to a predetermined extent in the case of the first sample S1, while the liquid crystals do not cause the light to be changed in phase in the cases of the second and third samples S2 and S3. In other words, the first sample S1 does not allow the liquid crystals to be aligned in a vertical direction, but the second and third samples S2 and S3 allow the liquid crystals to be aligned in a vertical direction.

FIG. 3B is a set of magnified photographs showing top surfaces of thin layers for three samples, and FIG. 3C is a set of magnified photographs showing vertical cross sections of thin layers for three samples. Referring to FIGS. 3B and 3C, the first, second and third samples S1 , S2 and S3 have a planar surface without an upward protrusion or a corrugated structure. However, these samples are different in planarization degree depending on the ratio of silicon oxide, wherein the surface of the first sample S1 is more planar than those of the second and third samples S2 and S3.

Surface roughness is measured to perform quantitative analysis for the planarization degree. The measurement shows that a root mean square value of the surface roughness is 1.067 nm for the first sample S1, 1.304 nm for the second sample S2, and 1.348 nm for the third sample S3. The first, second and third samples S1, S2 and S3 have a planar surface, since the root mean square of the surface roughness of the samples S1, S2 and S3 is 2 nm or less.

In general, when the root mean square of the surface roughness is about 3 nm or less, the surface of the thin layer is planar. In contrast, when the root mean square of the surface roughness exceeds a predetermined value, the surface of the thin layer is corrugated, exerting a bad influence upon alignment of the liquid crystals.

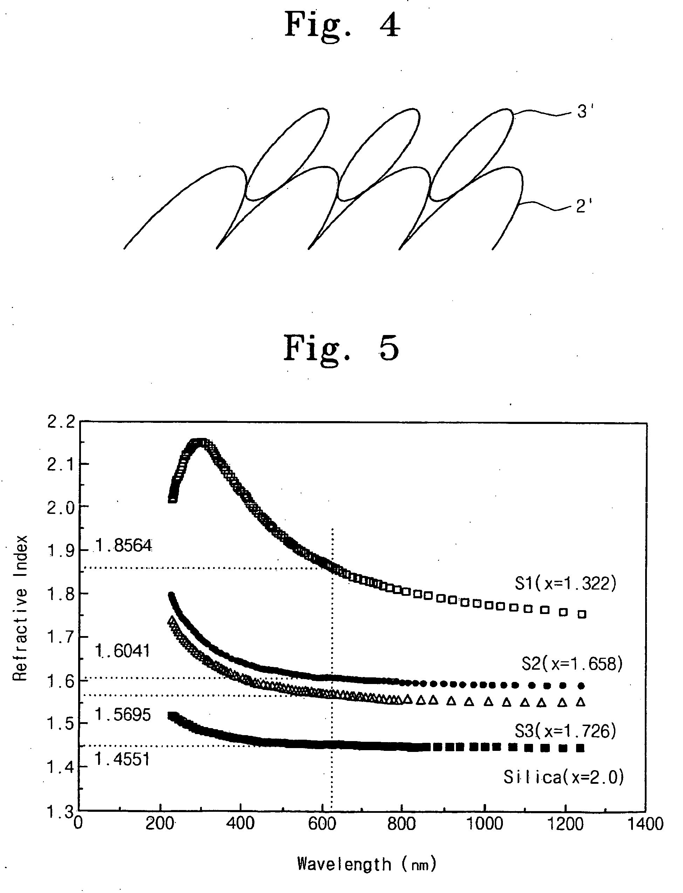

FIG. 4 is a view for explaining an alignment principle of an ordinary alignment layer. Referring to FIG. 4, a predetermined alignment layer 2' is formed with a corrugated surface and liquid crystals 3' are physically fixed in the corrugated surfaces while being slantingly aligned in a predetermined direction. The alignment layer with this corrugated surface allows the liquid crystals to be aligned in a desired direction. A conventional inorganic alignment layer has aligned the liquid crystals in a vertical, horizontal, or slant direction based on the above principle.

Among the first, second and third samples S1 , S2 and S3, only the second and third samples S2 and S3 except for the first sample S1 allow the liquid crystals to be aligned in a vertical direction. However, as illustrated in FIG. 4B and 4C, the physical shape of the first, second and third samples S1 , S2 and S3 is identical to each other. Hence, although the liquid crystals in the second and third samples S2 and S3 are vertically aligned unlike the liquid crystals in the first sample S1, this may not relate to physical factors depending on a surface shape of the thin layer.

As described above, except for the physical factors depending on the surface shape of the thin layer, a van der Waals force can be considered as a chemical factor by which the liquid crystals are aligned in a vertical direction in the second and third samples S2 and S3. The van der Waals force is created between molecules spaced apart from each other by a predetermined distance, and potential energy according to the van der Waals force can be expressed by Equation (1) as follows:

$$V = (-)\lambda/r^6 \tag{1}$$

(Source: Minhua Lu, "Liquid Crystal Orientation Induced by van der Waals Interaction," Jap. J. Application. Phy. Vol. 43, pp 81 56, 2004)

When Equation (1) is applied to the liquid crystal and the alignment layer which are spaced apart from each other, r indicates the distance between the liquid crystal and the alignment layer, and $\lambda$ is obtained by multiplying the polarizability of the alignment layer and the liquid crystal as expressed in Equation (2).

$$\lambda \propto \int \alpha_1(\omega) \cdot \alpha_2(\omega) d\omega \tag{2}$$

(Source: the same as that of Equation (1))

In Equation (2), $\alpha_1(\omega)$ is the polarizability of the alignment layer, $\alpha_2(\omega)$ is the polarizability of the liquid crystal, and $\omega$ is the frequency of light transmitting through the alignment layer and the liquid crystal.

Equations (1) and (2) can be analyzed as follows. On the assumption that the liquid crystal having a specific physical property is vertically aligned on the alignment layer, $\alpha_2(\omega)$ of Equation (2) can be regarded as a constant if there is no change caused by the frequency $\omega$. Because $\alpha_1(\omega)$ depends on the ratio of components in the alignment layer, the potential energy may vary according to $\alpha_1(\omega)$ when $\alpha_2(\omega)$ has a fixed value.

In this case, as shown in Equation (2), $\lambda$ becomes greater as a value of $\alpha_1(\omega)$ becomes increased. In addition, as shown in Equation (1), the potential energy becomes reduced as $\lambda$ becomes increased. Since the material shows a more stable state as the potential energy becomes reduced in the thermodynamic aspect, if $\alpha_1(\omega)$ has a greater value, the liquid crystals can be vertically aligned in a more stable manner.

Under this assumption, as the value of x becomes greater in the thin layer of silicon oxide (SiOx), the potential energy becomes lower. This can be qualitatively inferred as follows. In the thin layer of silicon oxide, the interatomic bonds are divided into two types: silicon-to-silicon (Si-Si) bond and silicon-to-oxygen (Si-O) bond. As the value of x becomes greater, the number of Si-O bonds is greater than that of Si-Si bonds. This can be seen from the graph of FIG. 3 for the component analysis of the first, second and third samples S1 , S2 and S3 as described above.

Referring again to FIG. 2, the Si-Si bond exists in the first sample S1, but not in the second and third samples S2 and S3. The Si-Si bond exhibits non-polarity because the same atoms are bonded to each other, while the Si-O bond exhibits polarity because different atoms are bonded to each other, in which oxygen has electro-negativity greater than that of silicon.

As described above, as the value of x increases, the number of polar bonds increases in the silicon oxide layer. As a result, the polarizability indicating the capacity of being polarized into positivity (+) and negativity (-) when an external electric field is applied increases. In view of Equations (1) and (2), as the polarizability increases, the liquid crystals can be vertically aligned on the alignment layer in a more stable way.

The value of x in the first sample S1 is 1.322, which is less than 1.5. The values of x in the second and third samples S2 and S3 are 1.658 and 1.726, each of which is greater than 1.5. These results show that the polarizability may be reduced in the silicon oxide layer as the value of x approaches 1, so that the horizontal alignment characteristic is improved, and the polarizability may be increased in the silicon oxide layer as the value of x approaches 2, so that the vertical alignment characteristic is improved. Hence, the alignment of the liquid crystals is determined based on the middle value between 1 and 2, i.e. 1.5. That is, if the value of x is greater than 1.5, the liquid crystals are vertically aligned. In contrast, if the value of x is less than 1.5, the liquid crystals are horizontally aligned. Furthermore, in the case of the vertical alignment, according to the present invention, the value of x is set within a range from 1.65 to 1.75 so as to cover the values of x in the second and third samples S2 and S3.

In addition to the above-described qualitative analysis, the polarizability can be quantitatively calculated in the first, second and third samples S1, S2 and S3, as follows.

In a specific medium, the polarizability can be expressed by Equation (3) as follows:

$$\frac{4\pi\alpha N}{3} = \frac{n^2-1}{n^2+1}V \qquad (3)$$

(Source: J.N. Israelachvili, "Intermolecular and Surface Forces," Academic Press, 1991)

In Equation (3), $\alpha$ is the polarizablity of the medium, N is the Avogadro number, n is the refractive index, and V is the molar volume of the medium. In order to calculate the polarizability of the first, second and third samples S1, S2 and S3 by using Equation (3), the refractive index must be measured in the first, second and third samples S1, S2 and S3.

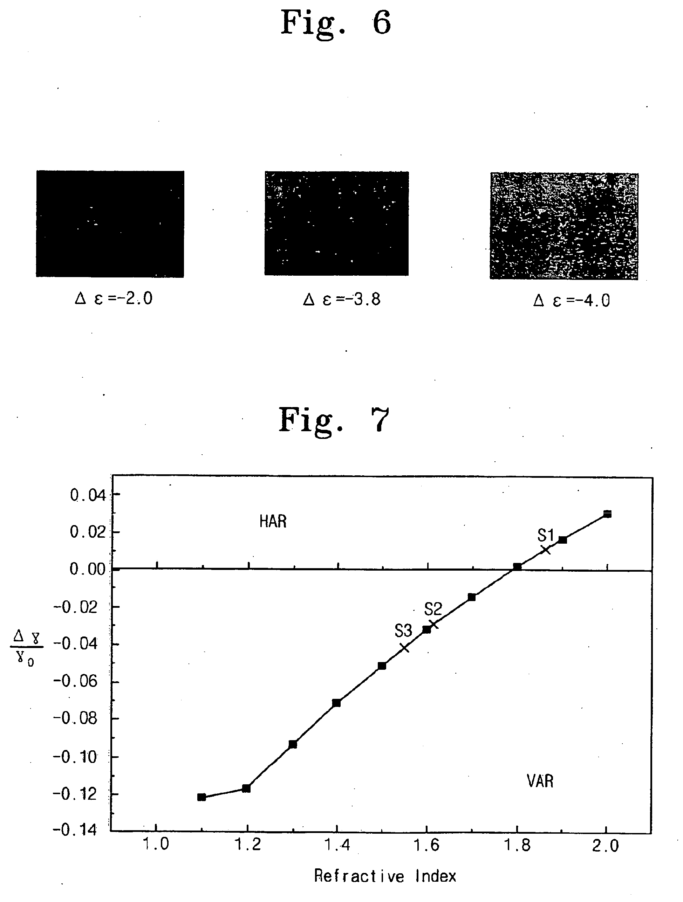

FIG. 5 is a graph illustrating measurement results of a refractive index with respect to thin layers for three samples. In FIG. 5, the x-axis indicates a wavelength of light traveling through a medium, and the y-axis indicates a refractive index depending on the wavelength. FIG. 6 illustrates a refractive index of silica ($SiO_2$), as a comparative example, as well as refractive indexes of the first, second and third samples S1, S2 and S3.

Referring to FIG. 5, the refractive index is reduced as the wavelength increases, except for the first sample S1. However, the first sample S1 shows a tendency similar to the second and third samples S2 and S3 within a visible ray range from about 380 nm to about 770 nm) except for a very short wavelength range.

In the case of the same wavelength, as the value of x decreases, the refractive index increases. For example, with respect to red light having a wavelength of 633 nm, the first sample S1 has a refractive index of 1.8564, the second sample S2 has a refractive index of 1.6041, the third sample S3 has a refractive index of 1.5695, and silica has a refractive index of 1.4551.

The polarizability of the first, second and third samples S1, S2 and S3 is calculated by using these refractive indexes and Equation (3). As a result, the first sample S1 has a polarizability of 1.841, the second sample S2 has a polarizability of 2.378, and the third sample S3 has a polarizability of 1.726. In this manner, as the value of x increases in the thin layer of silicon oxide, the polarizability increases. This result is consistent with the qualitatively analysis result as described above.

In the previous description, the liquid crystals are assumed to be shared in the first, second and third samples S1, S2 and S3 in order to perform the qualitative analysis based on Equation (2). However, although the alignment layer has an excellent vertical alignment characteristic in the LCD, the liquid crystals may not be vertically aligned depending on their physical properties.

FIG. 6 is a photograph showing light transmittance in a liquid crystal display (LCD) according to dielectric anisotropy of liquid crystals on the same alignment layer. The silicon oxide layer (x=1.726) corresponding to the third sample S3 was used as the alignment layer, and the liquid crystals having dielectric anisotropies ($\Delta\varepsilon$) of -2.0, -3.8 and -4.0 were used. Two polarizing plates were disposed while interposing the liquid crystals and the thin layers therebetween in such a manner that absorption axes of the polarizing plates were perpendicular to each other. In this case, when the liquid crystals are aligned perpendicularly to the alignment layer, a black state occurs, thereby displaying black. As illustrated in FIG. 6, when the liquid crystals have the dielectric anisotropies of -2.0 and -3.8, the liquid crystals exhibit a black state. In contrast, when the liquid crystals have the dielectric anisotropy of - 4.0, light leakage occurs.

Accordingly, in order to vertically align the liquid crystals, the liquid crystals having the dielectric anisotropy less than -4.0 are preferably used. Further, in the case of the vertically aligned liquid crystals, they must have negative dielectric anisotropy so as to be aligned in a direction perpendicular to an electric field. Hence, the liquid crystals must have the dielectric anisotropy within a range from about -4.0 to about 0. When the dielectric anisotropy closely approaches 0, the operation of the LCD is degraded. For this reason, the dielectric anisotropy of the liquid crystals preferably has a range from about -3.9 to about -1.0.

FIG. 7 is a graph illustrating an alignment characteristic, which is varied depending on a reflective index of an alignment layer.

In FIG. 7, the x-axis indicates the reflective index of the alignment layer, and the $\gamma$-axis indicates a change in interfacial energy at an interface between the alignment layer and the liquid crystal. The interfacial energy change ($\Delta\gamma$/

γ0) of the y-axis is standardized by dividing a difference (γ1-γ2) between vertical interfacial energy (when the liquid crystals are aligned in a vertical direction) ($\gamma_1$) and horizontal interfacial energy (when the liquid crystals are aligned in a horizontal direction) ($\gamma_2$) by a fixed value ($\gamma_0$). The graph of the reflective index vs. the interfacial energy change is derived from calculated results based on Equations (1) and (2), which are disclosed in the paper of Minhua Lu.

Referring to FIG. 7, the interfacial energy change has a negative value at a region where the reflective index of the alignment layer is less than 1.8, while the interfacial energy change has a positive value at a region where the reflective index of the alignment layer is greater than 1.8. The former ($\Delta\gamma<0$) means that the vertical interfacial energy ($\gamma$1) is lower than the horizontal interfacial energy ($\gamma$2). This indicates that when the liquid crystals are aligned in a vertical direction, the liquid crystals are thermodynamically stable, so that the liquid crystals tend to be vertically aligned at the region where the reflective index of the alignment layer is less than 1.8. In contrast, the liquid crystals tend to be horizontally aligned at the region where the interfacial energy change has the positive value ($\Delta\gamma>0$).

This analysis is consistent with test results for the first, second and third samples S1 , S2 and S3. As illustrated in FIG. 7, when the first, second and third samples S1 , S2 and S3 are plotted on the graph according to their reflective indexes (1.8564, 1.604 and 1.569), the first sample S1 is located at a horizontal alignment region HAR, while the second and third samples S2 and S3 are located at a vertical alignment region VAR.

As previously stated in Equation (3), the reflective index of the alignment layer is related to the polarizability of the alignment layer. Further, the polarizability of the alignment layer is also related to the ratio of silicon oxide constituting the alignment layer. Thus, the vertical or horizontal alignment characteristic of the alignment layer is related to the ratio of silicon oxide constituting the alignment layer.

Hereinafter, a method of fabricating the alignment layer will be described.

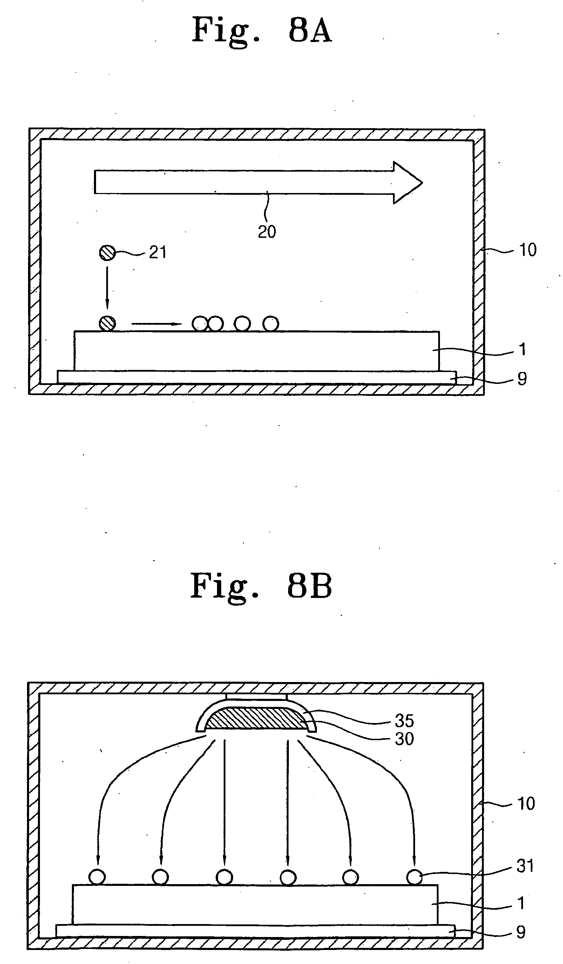

FIGS. 8A and 8B are views for explaining a method of forming an alignment layer in accordance with different embodiment of the present invention.

Referring to FIG. 8A, the alignment layer can be formed through chemical vapor deposition. A process target substrate 1 is transferred into a process chamber 10, and then seated on a stage 9. A process material 20 is supplied to the process chamber 10. The process material 20 includes a reactant 21 reacted with the substrate 1 and a carrier gas carrying the reactant 21. The carrier gas flows in the process chamber 10 in a direction parallel to the substrate 1. When the carrier gas flows, the reactant 21 moves toward a surface of the substrate 1. The reactant 21 is diffused to and reacted with the surface of the substrate 1. As a result, nuclei of a material to be deposited are created. Then, a thin layer is deposited while the nuclei are being grown.

When the silicon oxide layer is formed, various reactants can be used. For example, silane ($SiH_4$) and oxygen ($O_2$) are used to form the silicon oxide layer satisfying the following formula.

$SiH_4 + O_2 = SiO_2 + 2H_2$

In this case, when concentrations of silane ($SiH_4$) and oxygen ($O_2$) are adjusted, the ratio of silicon oxide constituting the alignment layer formed on the substrate 1 can be adjusted. Specifically, when a vertical alignment layer is formed, the oxygen density increases such that the ratio of silicon oxide becomes greater than 1:1.5. Further, when a horizontal alignment layer is formed, the oxygen density decreases such that the ratio of silicon oxide becomes less than 1 :1.5.

The chemical vapor deposition causes the alignment layer to be vertically deposited on the substrate and finally have a planar surface. Conventionally, the surface of the alignment layer is adapted to have concaves and convexes, and then the liquid crystals are aligned in a desired direction. Hence, the chemical vapor deposition is difficult to apply to the formation of the alignment layer. However, in the present invention capable of adjusting the ratio of silicon oxide to align the liquid crystals in a vertical or horizontal direction although the alignment layer has the planar surface, the chemical vapor deposition can be applied. This application of the chemical vapor deposition allows a large area of alignment layer to be readily formed so as to be used in a large-size LCD.

Referring to FIG. 8B, the alignment layer can be formed by evaporation deposition. A process target substrate 1 is transferred into a process chamber 10, and then seated on a stage 9. A process material 30 is stored in a supply 35, which is vertically spaced apart from the center of the substrate 1. The supply 35 is provided with a heating means, thereby heating and evaporating the process materials 30. The evaporation deposition includes sublimating a solid process material 30 into gases and evaporating a liquid process material 30 into gases. The evaporated process material 31 flows toward and is attached to the substrate 1, and in the mean time, it is deposited on the substrate 1.

When the thin layer of silicon oxide is formed, various process materials 31 can be used. For example, silicon monoxide (SiO) powder and silicon dioxide ($SiO_2$) powder are used. In this case, by adjusting working pressure in the process chamber 10 and separately supplying oxygen if necessary, the ratio of silicon oxide of the thin layer is formed on the substrate 1 can be adjusted.

As illustrated in FIG. 8B, when the supply 35 is located just above the center of the substrate 1, the alignment layer is vertically deposited on the substrate, so that the alignment layer has a planar surface. Conventionally, the surface of the alignment layer is corrugated in order to align the liquid crystals in a desired direction. Thus, oblique evaporation deposition is performed by slantingly disposing the supply 35 with respect to the center of the substrate 1. The oblique evaporation deposition is required to precisely control an inclination angle. However, since the liquid crystals may be aligned in a vertical or horizontal direction by adjusting the ratio of silicon oxide to the alignment layer although the alignment layer has the planar surface, such oblique evaporation deposition is not necessary.

The method of forming an alignment layer using the chemical vapor deposition or the evaporation deposition has been described for illustrative purposes, but other methods of forming a thin layer except for these methods may be applied. Hereinafter, an LCD having the alignment layer formed by the above-described method will be described.

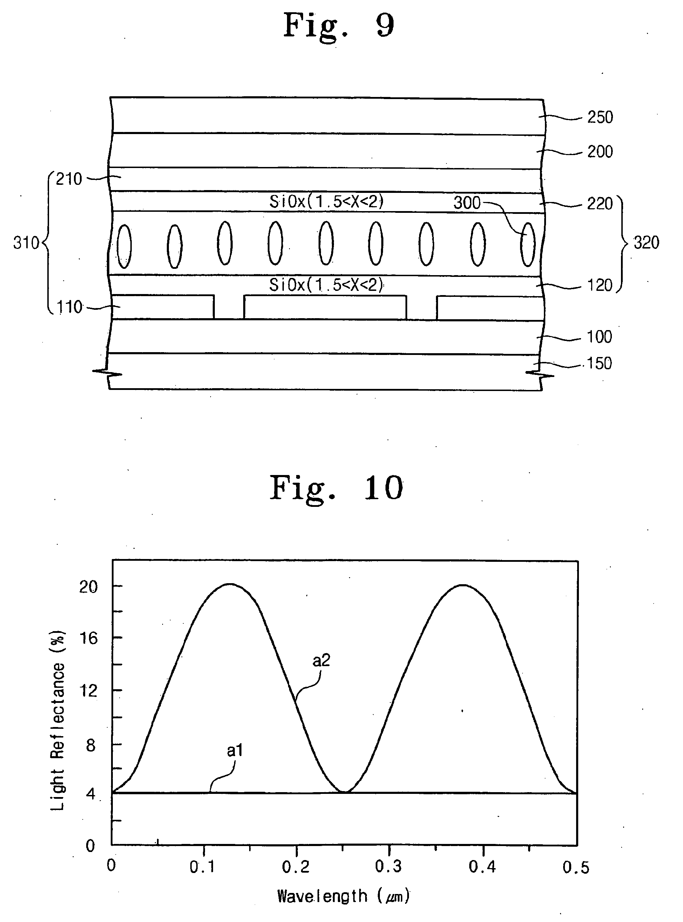

FIG. 9 is a cross-sectional view of an LCD according to an embodiment of the present invention.

Referring to FIG. 9, a first substrate 100 and a second substrate 200 are provided to be opposite to each other. The first substrate 100 includes pixel regions, each of which is defined as a minimum unit displaying an image. Liquid crystals 300 are aligned between the first and second substrates 100 and 200. In order to control an alignment direction of the liquid crystals 300, a transparent electrode 310 and an alignment layer 320 are formed on the first and second substrate 100 and 200. The transparent electrode 310 formed on the first substrate 100 serves as a pixel electrode 110 that is separately formed in each pixel regions. The transparent electrode 310 formed on the second substrate 200 serves as a common electrode 210 to cover the whole surface of the second substrate 200. The alignment layer 320 includes a first alignment layer 120 formed on the first substrate 100 to cover the pixel electrode 110 and a second alignment layer 220 formed on the common electrode 1 20.

The alignment layer 320 includes a silicon oxide (SiOx) layer. When a value of x is within a range from about 1.5 to about 2.0, the liquid crystals 300 are aligned substantially perpendicular to the first and second substrates 100 and 200.

The first and second substrates 100 and 200 are attached with first and second polarizing plates 150 and 250 on their external surfaces. The first and second polarizing plates 150 and 250 are disposed so that their absorption axes are perpendicular to each other. When the liquid crystals 300 are vertically aligned, light incident onto the first polarizing plate 150 is polarized in one direction, and then absorbed at the second polarizing plate 250. As a result, the LCD becomes a black state.

The LCD applies different voltages to the pixel electrode 110 and the common electrode 210, respectively. When the different voltages are applied to the pixel electrode 110 and the common electrode 210, an electric field is vertically established between the first and second substrates 100 and 200 and applied to the liquid crystals 300. The liquid crystals 300 have the negative dielectric anisotropy, and thus are slantingly aligned with respect to a direction perpendicular to the electric field. In this state where the liquid crystals 300 are slantingly aligned, the light incident onto the first polarizing plate 150 is polarized in one direction, undergoes a phase shift while traveling through the liquid crystals 300, and passes through the second polarizing plate 250. The light passing through the second polarizing plate 250 displays an image outside. An intensity of the electric field is adjusted so as to correspond to the image to be displayed. When the maximum intensity of electric field is established, the LCD becomes the brightest white state.

While the LCD is operating as described above, a light transmittance in the LCD is affected by the value of x and a thickness of the alignment layer 320. The LCD according to the present embodiment may have the maximum light transmittance by controlling the value of x and the thickness of the alignment layer 320 as described hereinafter.

FIG. 10 is a graph illustrating a light reflectance as a function of a wavelength in the LCD of FIG. 9.

In FIG. 10, a graph a1 represents the light reflectance of the LCD in case that the LCD does not have the transparent electrode 310, and a graph a2 represents the light reflectance of the LCD in case that the LCD has the transparent electrode 310. The reflectance of the LCD represented by the graph a1 has a constant value of about 4% while the reflectance of the LCD represented by the graph a2 has a range of about 4% to about 20%. Therefore, the light transmittance of the LCD decreases as much as the maximum 20% due to the transparent electrode 310 that serves as the pixel electrode 110 and the common electrode 210. This decrement of the light transmittance is due to reflection by the transparent electrode 310. The transparent electrode 310 includes indium tin oxide (ITO) or indium zinc oxide (IZO). The light reflectance of the transparent electrode 310 having ITO or IZO depends on the value of x and the thickness of the alignment layer 320.

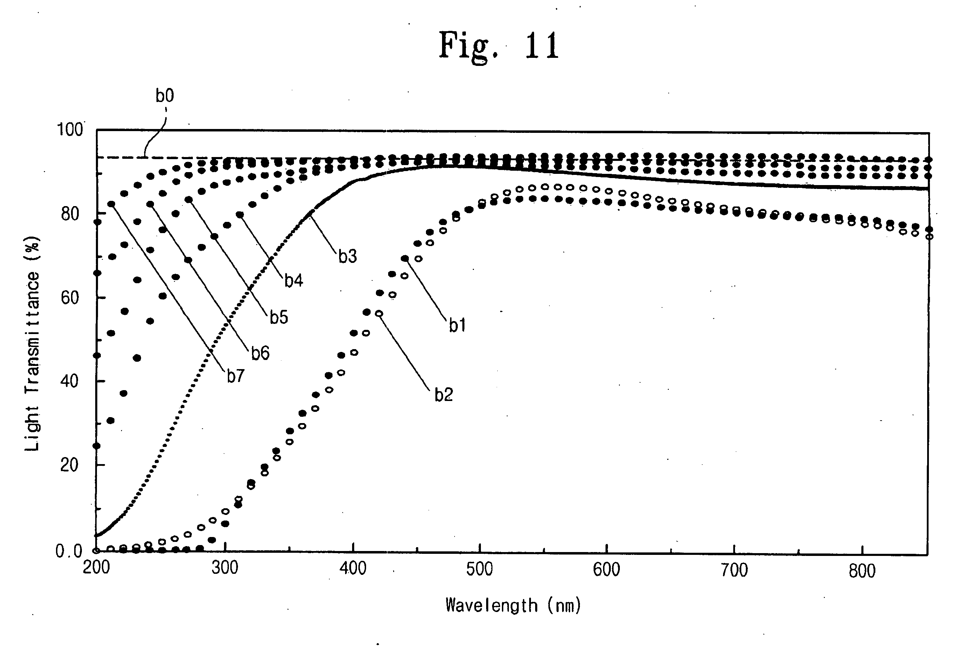

FIG. 11 is a graph illustrating a light transmittance as a function of a wavelength when alignment layers in the LCD FIG. 9 have different composition ratios.

A graph b0 illustrated in FIG.1 1 represents the light transmittance in case that the LCD does not have the transparent electrode 310 and the alignment layer 320. Graphs b1 to b7 illustrated in FIG.1 1 represent the light transmittance in case that the LCD has the transparent electrode 310 and the alignment layer 320 with different composition ratios. The alignment layer 320 includes a silicon oxide (SiOx) layer, and the value of x is 1.13, 1.27, 1.46, 1.65, 1.70, 1.83 and 1.89 with respect to the graphs b1, b2, b3, b4, b5, b6 and b7, respectively.

Referring to FIG. 11, the light transmittance of the LCD generally increases in accordance with increase of the value of x. The reason of this result is that an absorption coefficient decreases in accordance with increase of the value of x. For example, when the value of x increases, the alignment layer 320 has glass properties, thereby increasing the light transmittance of the LCD. On the contrary, when the value of x decreases, the alignment layer 320 has properties opposite to the glass properties, thereby decreasing the light transmittance of the LCD.

The LCD uses a visible light in order to display an image. Therefore, it is preferable that the composition ratios of the alignment layer 320 are determined to allow the LCD to have a high light transmittance for a wavelength range corresponding to the visible light. As illustrated FIG. 11, when the value of x is approximately greater than about 1.65 (b4, b5, b6, b7), the LCD has the light transmittance of about 90% for the wavelength range of about 380 nm to about 770 nm corresponding to the visible light.

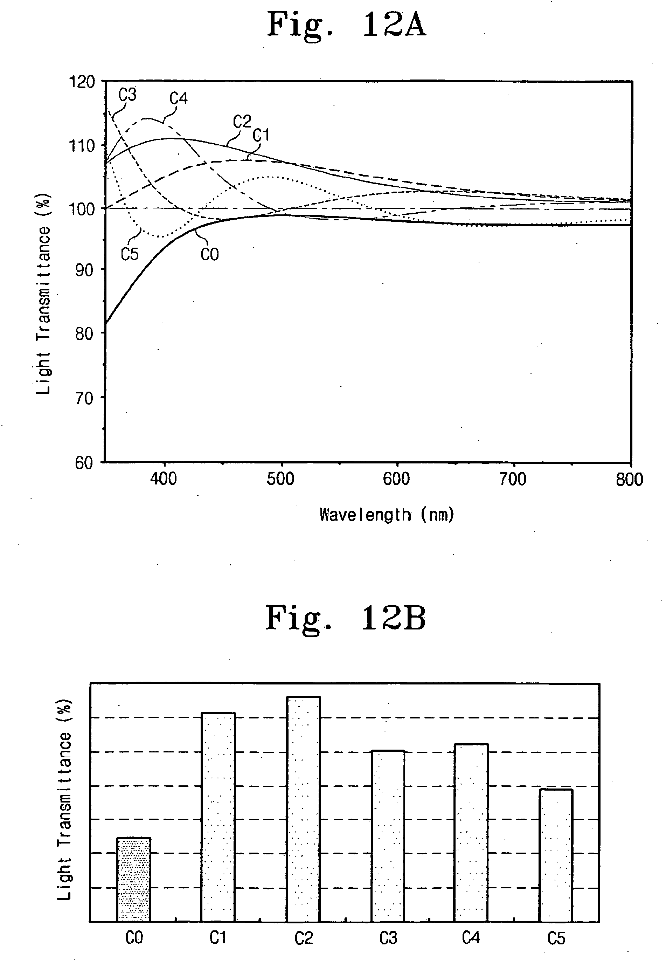

FIG. 12A is a graph illustrating a light transmittance as a function of a wavelength when alignment layers in the LCD of FIG. 9 have different thickness. FIG. 12B is a graph illustrating a cumulative light transmittance within the wavelength range corresponding to the visible light when alignment layers in the LCD of FIG. 9 have different thickness.

A graph c0 illustrated in FIG.12A represents the light transmittance in case that the LCD has an organic alignment layer such as a polyimide with its thickness of about 100nm. Graphs c1 to c5 illustrated in FIG.12A represent the light transmittance in case that the LCD has the transparent electrode 310 and the alignment layer 320 including a silicon oxide (SiOx) with different thickness. The thickness of the alignment layer 320 is 107 nm, 1 20 nm, 170 nm, 220 nm and 280 nm with respect to the graphs c1, c2, c3, c4 and c5, respectively.

Referring to FIG. 12A, the light transmittance is approximately less than 100% at using the organic alignment layer and greater than 100% at using the alignment layer 320 with the silicon oxide. In the present embodiment, the light transmittance illustrated in FIG. 12A and FIG. 12B is a relative value with respect to a reference where the LCD has the transparent layer 310 without the alignment layer 320. As illustrated in FIG. 12A, the light transmittance when the LCD has the organic alignment layer decreases in comparison with the light transmittance when the LCD does not have the alignment layer 320. The light transmittance when the LCD has the alignment layer 320 with the silicon oxide increases in comparison with the light transmittance when the LCD does not have the alignment layer 320. The increment of the light transmittance depends on the wavelength range.

Referring to FIG. 12B, the cumulative light transmittance when the LCD has the alignment layer 320 with silicon oxide increases by about 7% in comparison with the light transmittance when the LCD has the organic alignment layer. In case that the LCD has the alignment layer 320 with silicon oxide, the increment of the cumulative light transmittance depends on the thickness of the alignment layer 320. The LCD may have a maximum light transmittance when the thickness of the alignment layer 320 is approximately 100 nm. The light transmittance decreases in accordance with increase of the thickness of the alignment layer when the thickness of the alignment layer is over 200 nm.

If the alignment layer 320 is too thin, it is difficult to control an alignment of liquid crystals 300. So, the alignment layer 320 is required to have the thickness of about at least 50 nm in order to readily control the alignment of the liquid crystals 300. If the alignment layer 320 is too thick, the light transmittance of the LCD decreases. So, the alignment layer 320 is limited to have the thickness of less than about 300 nm. If the thickness of the alignment 320 is over 300 nm, the light transmittance of the LCD may be less than 100% as illustrated in FIG.12A and 12B. In other words, preferably, the alignment layer 320 has the thickness from about 50 nm to about 300 nm.

FIG. 1 3 is a graph illustrating a mutual relation between thickness of a transparent electrode and thickness of an alignment layer to allow the LCD of FIG. 9 to have a high light transmittance.

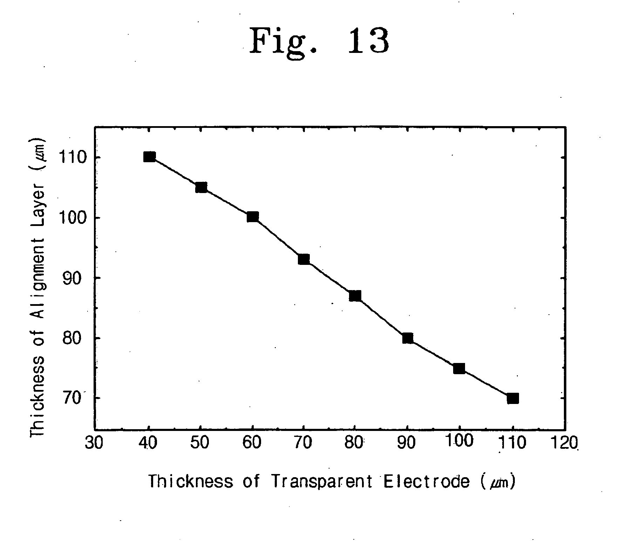

Referring to FIG. 13, the thickness of the transparent electrode 310 and the thickness of the alignment layer 320 to allow the LCD to have a high light transmittance is inverse proportional to each other. That is, when thickness of the transparent electrode 310 increases, the thickness of the alignment layer 320 decreases in order that the LCD has a high light transmittance.

As shown in FIG. 13, the thickness of the alignment layer 320 is in a range from about 70 nm to about 110 nm, and the LCD has the maximum light transmittance when the thickness of the alignment layer 320 is near 100 nm as shown in FIG. 12A. In consideration of the above two thickness ranges, preferably, the alignment layer 320 may have the thickness from about 90 nm to about 110 nm.

As described above, since the liquid crystals 300 are vertically or horizontally aligned by adjusting only the composition ratio of the silicon oxide without considering physical factors related to the silicon oxide, the first and second alignment layers 120 and 220 can be readily formed in a large area by using the chemical vapor deposition.

According to the present invention, the alignment layer of the LCD is formed by using the thin layer of silicon oxide. The thin layer of silicon oxide has excellent transparence and thermal/chemical/physical stability.

Further, the ratio of silicon oxide in the thin layer is adjusted, so that the liquid crystals can be substantially vertically or horizontally aligned. When the liquid crystals are aligned in a predetermined direction, the alignment layer for a large-size display is readily formed by using the chemical vapor deposition without considering physical factors other than the ratio such as a surface geometry of the thin layer of the silicon oxide.

Although the exemplary embodiments of the present invention have been described, it is understood that various changes and modifications will be apparent to those of ordinary skill in the art and can be made without, however, departing from the scope of the appended claims.

**EP 1 845 408 B1**

**Claims**

**1.** An alignment layer (320) for substantially vertically aligning liquid crystals (300) having a negative dielectric anisotropy,

said alignment layer (320) consisting of a planar silicon oxide (SiOx) layer (120, 220) deposited on a substrate (100, 200) from a vertical direction with respect to the substrate surface,

said silicon oxide (SiOx) layer (120, 220) having a surface roughness whose root mean square is equal to or less than about 3 nm, the parameter x of the SiOx material composition being adjusted such that the refractive index of the silicon oxide (SiOx) layer (120, 220) is smaller than 1.8 , wherein the refractive index relates to a wavelength of 633 nm;

**characterized in that**

the value of x has a range from about 1.65 to about 1.75.

**2.** The alignment layer (320) of claim 1, wherein the liquid crystals (300) have a dielectric anisotropy from about -3.9 to about -1.0.

**3.** The alignment layer (320) of claim 1, wherein the silicon oxide layer (120, 220) has a thickness from about 50 to about 300 nm.

**4.** The alignment layer (320) of claim 3, wherein the silicon oxide layer (120, 220) has a thickness from about 90 to about 110 nm.

**5.** An alignment layer (320) for substantially horizontally aligning liquid crystals (300) having a negative dielectric anisotropy,

said alignment layer (320) consisting of a planar silicon oxide (SiOx) layer (120, 220) deposited on a substrate (100, 200) from a vertical direction with respect to the substrate surface,

said silicon oxide (SiOx) layer (120, 220) having a surface roughness whose root mean square is equal to or less than about 3 nm, the parameter x of the SiOx material composition being adjusted such that the refractive index of the silicon oxide (SiOx) layer (120, 220) is larger than 1,8 , wherein the refractive index relates to a wavelength of 633 nm.

**6.** The alignment layer (320) of claim 5, wherein the silicon oxide layer (120, 220) has a thickness from about 50 to about 300 nm.

**7.** The alignment layer (320) of claim 6, wherein the silicon oxide layer (120, 220) has a thickness from about 90 to about 110 nm.

**8.** A method of forming an alignment layer (320) for substantially vertically aligning liquid crystals (300) having a negative dielectric anisotropy, comprising:

depositing a planar silicon oxide (SiOx) layer (120, 220) on a substrate (100, 200) from a vertical direction with respect to the substrate surface, said silicon oxide (SiOx) layer (120, 220) having a surface roughness whose root mean square is equal to or less than about 3 nm, the parameter x of the SiOx material composition being adjusted such that the refractive index of the silicon oxide (SiOx) layer (120, 220) is smaller than 1.8 , wherein the refractive index relates to a wavelength of 633 nm;

**characterized in that**
the value of x has a range from about 1.65 to about 1.75.

**9.** A method of forming an alignment layer (320) for substantially horizontally aligning liquid crystals (300) having a negative dielectric anisotropy, comprising:

depositing a planar silicon oxide (SiOx) layer (120, 220) on a substrate (100, 200) from a vertical direction with respect to the substrate surface, said silicon oxide (SiOx) layer (120, 220) having a surface roughness whose root mean square is equal to or less than about 3 nm, the parameter x of the SiOx material composition being adjusted such that the refractive index of the silicon oxide (SiOx) layer (120, 220) is larger than 1.8, wherein the refractive index relates to a wavelength of 633 nm.

10. The method of claim 8 or 9, wherein depositing the silicon oxide layer (120, 220) comprises depositing silicon oxide by means of an evaporation deposition.

11. The method of claim 10, wherein process material used for depositing the silicon oxide layer (120, 220) is supplied from a supply located on a virtual line extending from the center of the substrate (100, 200) in a direction substantially perpendicular to the substrate (100, 200).

12. The method of claim 11, wherein the process material comprises a powder of silicon monoxide (SiO) or silicon dioxide (SiO2).

13. A liquid crystal display comprising:

two substrates (100, 200) that face each other:

liquid crystals (300) having a negative dielectric anisotropy aligned between the two substrates (100, 200); and
alignment layers (120, 220; 320) according to one of the claims 1 to 4 formed on the two substrates (100, 200), respectively, wherein the silicon oxide layer (120, 220) allows the liquid crystals (300) to be aligned in a direction substantially perpendicular to the two substrates (100, 200).

**Patentansprüche**

1. Ausrichtungsschicht (320) für die im Wesentlichen vertikale Ausrichtung von Flüssigkristallen (300) mit einer negativen dielektrischen Anisotropie,
wobei die Ausrichtungsschicht (320) aus einer planen Siliciumoxid-Schicht (SiOx) (120, 220) besteht, die auf einem Substrat (100, 200) aus einer vertikalen Richtung mit Bezug auf die Substratoberfläche abgeschieden wird,
wobei die Siliciumoxid-Schicht (SiOx) (120, 220) eine Oberflächenrauheit aufweist, deren quadratischer Mittelwert kleiner oder gleich etwa 3 nm ist,
wobei der Parameter x der SiOx-Materialzusammensetzung so eingestellt ist, dass der Brechungsindex der Siliciumoxid-Schicht (SiOx) (120, 220) kleiner als 1,8 ist, wobei sich die Brechungszahl auf eine Wellenlänge von 633 nm bezieht;
**dadurch gekennzeichnet, dass**
der Wert x eine Bandbreite von etwa 1,65 bis etwa 1,75 aufweist.

2. Ausrichtungsschicht (320) gemäß Anspruch 1, wobei die Flüssigkristalle (300) eine dielektrische Anisotropie von etwa -3,9 bis etwa -1,0 aufweisen.

3. Ausrichtungsschicht (320) gemäß Anspruch 1, wobei die Siliciumoxid-Schicht (120, 220) eine Dicke von etwa 50 bis etwa 300 nm aufweist.

4. Ausrichtungsschicht (320) gemäß Anspruch 3, wobei die Siliciumoxid-Schicht (120, 220) eine Dicke von etwa 90 bis etwa 110 nm aufweist.

5. Ausrichtungsschicht (320) für die im Wesentlichen horizontale Ausrichtung von Flüssigkristallen (300) mit einer negativen dielektrischen Anisotropie,
wobei die Ausrichtungsschicht (320) aus einer planen Siliciumoxid-Schicht (SiOx) (120, 220) besteht, die auf einem Substrat (100, 200) aus einer vertikalen Richtung mit Bezug auf die Substratoberfläche abgeschieden wird,
wobei die Siliciumoxid-Schicht (SiOx) (120, 220) eine Oberflächenrauheit aufweist, deren quadratischer Mittelwert kleiner oder gleich etwa 3 nm ist,
wobei der Parameter x der SiOx-Materialzusammensetzung so eingestellt ist, dass der Brechungsindex der Siliciumoxid-Schicht (SiOx) (120, 220) größer als 1,8 ist, wobei sich die Brechungszahl auf eine Wellenlänge von 633 nm bezieht;

6. Ausrichtungsschicht (320) gemäß Anspruch 5, wobei die Siliciumoxid-Schicht (120, 220) eine Dicke von etwa 50 bis etwa 300 nm aufweist.

7. Ausrichtungsschicht (320) gemäß Anspruch 6, wobei die Siliciumoxid-Schicht (120, 220) eine Dicke von etwa 90 bis etwa 110 nm aufweist.

8.  Verfahren zur Bildung einer Ausrichtungsschicht (320) für die im Wesentlichen vertikale Ausrichtung von Flüssigkristallen (300) mit einer negativen dielektrischen Anisotropie, das Folgendes umfasst:

Abscheiden einer planen Siliciumoxid-Schicht (SiOx) (120, 220) auf ein Substrat (100, 200) aus einer vertikalen Richtung mit Bezug auf die Substratoberfläche, wobei die Siliciumoxid-Schicht (SiOx) (120, 220) eine Oberflächenrauheit aufweist, deren quadratischer Mittelwert kleiner oder gleich etwa 3 nm ist, wobei der Parameter x der SiOx-Materialzusammensetzung so eingestellt ist, dass der Brechungsindex der Siliciumoxid-Schicht (SiOx) (120, 220) kleiner als 1,8 ist, wobei sich die Brechungszahl auf eine Wellenlänge von 633 nm bezieht;

**dadurch gekennzeichnet, dass**
der Wert x eine Bandbreite von etwa 1,65 bis etwa 1,75 aufweist.

9.  Verfahren zur Bildung einer Ausrichtungsschicht (320) für die im Wesentlichen horizontale Ausrichtung von Flüssigkristallen (300) mit einer negativen dielektrischen Anisotropie, das Folgendes umfasst:

Abscheiden einer planen Siliciumoxid-Schicht (SiOx) (120, 220) auf ein Substrat (100, 200) aus einer vertikalen Richtung mit Bezug auf die Substratoberfläche, wobei die Siliciumoxid-Schicht (SiOx) (120, 220) eine Oberflächenrauheit aufweist, deren quadratischer Mittelwert kleiner oder gleich etwa 3 nm ist, wobei der Parameter x der SiOx-Materialzusammensetzung so eingestellt ist, dass der Brechungsindex der Siliciumoxid-Schicht (SiOx) (120, 220) größer als 1,8 ist, wobei sich die Brechungszahl auf eine Wellenlänge von 633 nm bezieht

10.  Verfahren gemäß Anspruch 8 oder 9, wobei das Abscheiden der Siliciumoxid-Schicht (120, 220) das Abscheiden des Siliciumoxids mittels Aufdampfens umfasst.

11.  Verfahren gemäß Anspruch 10, wobei das zum Abscheiden der Siliciumoxid-Schicht (120, 220) verwendete Prozessmaterial von einer Quelle zugeführt wird, die auf einer virtuellen Linie angeordnet ist, die sich von der Mitte des Substrats (100, 200) in eine im Wesentlichen senkrecht zum Substrat (100, 200) stehende Richtung erstreckt.

12.  Verfahren gemäß Anspruch 11, wobei das Prozessmaterial ein Siliciummonoxid- (SiO) oder Siliciumdioxid-Pulver ($SiO_2$) umfasst.

13.  Flüssigkristall-Display, Folgendes umfassend:

zwei Substrate (100, 200), die einander zugewandt sind;
Flüssigkristalle (300) mit einer negativen dielektrischen Anisotropie, die zwischen zwei Substraten (100, 200) ausgerichtet sind; und
Ausrichtungsschichten (120, 220; 320) gemäß einem der Ansprüche 1 bis 4, die jeweils auf den zwei Substraten (100, 200) ausgebildet sind, wobei die Siliciumoxid-Schicht (120, 220) ermöglicht, die Flüssigkristalle (300) in eine im Wesentlichen senkrechte Richtung zu den zwei Substraten (100, 200) auszurichten.

**Revendications**

1.  Couche d'alignement (320) pour aligner sensiblement à la verticale des cristaux liquides (300) ayant une anisotropie diélectrique négative, laquelle couche d'alignement (320) se compose d'un couche plane (120, 220) d'oxyde de silicium ($SiO_x$) déposée sur un substrat (100, 200) depuis une direction verticale par rapport à la surface du substrat, ladite couche (120, 220) d'oxyde de silicium ($SiO_x$) ayant une rugosité de surface dont la moyenne quadratique est égale ou inférieure à environ 3 nm, le paramètre x dans la composition du matériau $SiO_x$ étant ajusté de telle façon que l'indice de réfraction de la couche (120, 220) d'oxyde de silicium ($SiO_x$) soit inférieur à 1,8, l'indice de réfraction étant lié à une longueur d'ondes de 633 nm ;
**caractérisée en ce que** la valeur de x est comprise entre environ 1,65 et environ 1,75.

2.  Couche d'alignement (320) selon la revendication 1, dans laquelle les cristaux liquides (300) ont une anisotropie diélectrique d'environ -3,9 à environ -1,0.

3.  Couche d'alignement (320) selon la revendication 1, dans laquelle la couche d'oxyde de silicium (120, 220) a une épaisseur d'environ 50 à environ 300 nm.

**4.** Couche d'alignement (320) selon la revendication 3, dans laquelle la couche d'oxyde de silicium (120, 220) a une épaisseur d'environ 90 à environ 110 nm.

**5.** Couche d'alignement (320) pour aligner sensiblement à l'horizontale des cristaux liquides (300) ayant une anisotropie diélectrique négative, laquelle couche d'alignement (320) se compose d'un couche plane (120, 220) d'oxyde de silicium ($SiO_x$) déposée sur un substrat (100, 200) depuis une direction verticale par rapport à la surface du substrat, ladite couche (120, 220) d'oxyde de silicium ($SiO_x$) ayant une rugosité de surface dont la moyenne quadratique est égale ou inférieure à environ 3 nm, le paramètre x dans la composition du matériau $SiO_x$ étant ajusté de telle façon que l'indice de réfraction de la couche (120, 220) d'oxyde de silicium ($SiO_x$) soit supérieur à 1,8, l'indice de réfraction étant lié à une longueur d'ondes de 633 nm.

**6.** Couche d'alignement (320) selon la revendication 5, dans laquelle la couche d'oxyde de silicium (120, 220) a une épaisseur d'environ 50 à environ 300 nm.

**7.** Couche d'alignement (320) selon la revendication 6, dans laquelle la couche d'oxyde de silicium (120, 220) a une épaisseur d'environ 90 à environ 110 nm.

**8.** Procédé pour former une couche d'alignement (320) pour l'alignement sensiblement à la verticale de cristaux liquides (300) ayant une anisotropie diélectrique négative, comprenant :

le dépôt d'une couche plane (120, 220) d'oxyde de silicium ($SiO_x$) sur un substrat (100, 200) depuis une direction verticale par rapport à la surface du substrat, ladite couche (120, 220) d'oxyde de silicium ($SiO_x$) ayant une rugosité de surface dont la moyenne quadratique est égale ou inférieure à environ 3 nm, le paramètre x dans la composition du matériau $SiO_x$ étant ajusté de telle façon que l'indice de réfraction de la couche (120, 220) d'oxyde de silicium ($SiO_x$) soit inférieur à 1,8, l'indice de réfraction étant lié à une longueur d'ondes de 633 nm ;

**caractérisé en ce que** la valeur de x est comprise entre environ 1,65 et environ 1,75.

**9.** Procédé pour former une couche d'alignement (320) pour l'alignement sensiblement à l'horizontale de cristaux liquides (300) ayant une anisotropie diélectrique négative, comprenant :

le dépôt d'une couche plane (120, 220) d'oxyde de silicium ($SiO_x$) sur un substrat (100, 200) depuis une direction verticale par rapport à la surface du substrat, ladite couche (120, 220) d'oxyde de silicium ($SiO_x$) ayant une rugosité de surface dont la moyenne quadratique est égale ou inférieure à environ 3 nm, le paramètre x dans la composition du matériau $SiO_x$ étant ajusté de telle façon que l'indice de réfraction de la couche (120, 220) d'oxyde de silicium ($SiO_x$) soit supérieur à 1,8, l'indice de réfraction étant lié à une longueur d'ondes de 633 nm.

**10.** Procédé selon la revendication 8 ou 9, dans lequel le dépôt de la couche d'oxyde de silicium (120, 220) comprend le dépôt d'oxyde de silicium au moyen d'un dépôt par évaporation.

**11.** Procédé selon la revendication 10, dans lequel le matériau de process utilisé pour déposer la couche d'oxyde de silicium (120, 220) est fourni par une alimentation située sur une ligne virtuelle partant du centre du substrat (100, 200) dans une direction sensiblement perpendiculaire au substrat (100, 200).

**12.** Procédé selon la revendication 11, dans lequel le matériau de process comprend une poudre de monoxyde de silicium (SiO) ou de dioxyde de silicium ($SiO_2$).

**13.** Afficheur à cristaux liquides comprenant :

deux substrats (100, 200) qui se font face ;
des cristaux liquides (300) ayant une anisotropie diélectrique négative alignés entre les deux substrats (100, 200) ; et
des couches d'alignement (120, 220 ; 320) selon l'une des revendications 1 à 4 formées sur les deux substrats (100, 200), respectivement, la couche d'oxyde de silicium (120, 220) permettant d'aligner les cristaux liquides (300) dans une direction sensiblement perpendiculaire aux deux substrats (100, 200).

# Fig. 1A

SiOx(1.5<X<2) ~2

~3

~1

# Fig. 1B

SiOx(1<X<1.5) ~2

~3

~1

# Fig. 2

# Fig. 3A

# Fig. 3B

# Fig. 3C

# Fig. 4

# Fig. 5

Silica(x=2.0)

S1(x=1.322)
S2(x=1.658)
S3(x=1.726)

Wavelength (nm)

Refractive Index

# Fig. 6

Δε=-2.0        Δε=-3.8        Δε=-4.0

# Fig. 7

# Fig. 8A

# Fig. 8B

# Fig. 9

SiOx(1.5<X<2)    300    — 220

SiOx(1.5<X<2)    — 120

# Fig. 10

Fig. 11

# Fig. 12A

# Fig. 12B

# Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MINHUA LU.** Liquid Crystal Orientation Induced by van der Waals Interaction. *Jap. J. Application. Phy.,* 2004, vol. 43, 81 56

- **J.N. ISRAELACHVILI.** Intermolecular and Surface Forces. Academic Press, 1991